# EUROPEAN PATENT APPLICATION

(11) **EP 4 576 366 A1**
(43) Date of publication of application: **25.06.2025**
(21) Application number: 24863840.5
(22) Date of filing: 27.06.2024
(51) Int. Cl.: H01M 50/244, H01M 50/291, H01M 50/249

(54) **BATTERY PACK AND VEHICLE INCLUDING SAME**

(30) Priority: 15.09.2023 KR 20230123394
(71) Applicant: LG Energy Solution, Ltd., Seoul 07335 (KR)
(72) Inventor: LEE, Yong-Ho, Daejeon 34122 (KR); PARK, So-Jeong, Daejeon 34122 (KR); SONG, Jong-Min, Daejeon 34122 (KR); AHN, Jun-Young, Daejeon 34122 (KR); OH, Kwang-Keun, Daejeon 34122 (KR); JUNG, In-Hyuk, Daejeon 34122 (KR); YANG, Jin-Oh, Daejeon 34122 (KR)
(74) Representative: Goddar, Heinz J.
(86) International application number: PCT/KR2024/008992
(87) International publication number: WO 2025/058190

(57) **Abstract**

A battery pack according to the present disclosure includes a cell array structure including a plurality of battery cells; a pack case accommodating the cell array structure; and a fixing portion disposed at a location at which the cell array structure and the pack case face each other and configured to fix the cell array structure to the pack case through form-fitting coupling.

## Description

### TECHNICAL FIELD

The present disclosure relates to a battery pack and a vehicle including the same, and more particularly, to a battery pack in which a cell array structure is mounted in a pack case using an empty space between battery cells to increase energy density of the battery pack and a vehicle including the same. This application is based on and claims priority from Korean Patent Application No. 10-2023-0123394, filed on September 15, 2023, with the Korean Intellectual Property Office, the disclosure of which is incorporated herein in its entirety by reference.

### BACKGROUND

Due to being easily applicable to different types of products and having electrical properties such as high energy density, secondary batteries are commonly used in not only portable devices but also electric vehicles (EVs) or hybrid electric vehicles (HEVs) that are powered by an electric power source. Secondary batteries can remarkably reduce the use of fossil fuels. In addition to the primary advantage, another advantage is that they do not generate by-products from the use of energy. Due to these advantages, secondary batteries are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries and so on. A unit secondary battery cell or a unit battery cell has an operating voltage of about 2.5V to 4.5V. Accordingly, when higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack and the electrical connection type may be variously set depending on the required output voltage and/or charge/discharge capacity.

Meanwhile, lithium ion secondary batteries may be classified into pouch-type secondary batteries in which the electrode assembly is included in a pouch of an aluminum laminate sheet and can-type secondary batteries in which the electrode assembly is included in a metal can according to the shape of the battery case. Additionally, the can-type secondary batteries may be sub-classified into cylindrical batteries and prismatic batteries according to the shape of the metal can.

In particular, to provide high voltage and high current, the cylindrical batteries form a battery module or a battery pack by piling or stacking the plurality of battery cells with or without a cartridge to form at least one unit structure (for example, a cell to pack structure), establishing electrical connection and packaging in a pack case.

Recently, in keeping up with the trend towards higher density of the pack, the unit structure including the plurality of battery cells tends to increase the size and weight. Accordingly, it is necessary to improve a mounting structure for firmly coupling the unit structure to the pack case. In particular, in terms of energy density (E/D), it is necessary to optimize the mounting structure and shape to maximize the cell capacity for the same volume and improve assembly efficiency.

### DISCLOSURE

### Technical Problem

The present disclosure is designed to solve the above-described problems, and therefore the present disclosure is directed to providing a battery pack in which a protruding structure on an inner wall of a pack case and a recessed structure in an empty space between battery cells form-fit to each other, thereby optimizing a mounting structure for mounting a cell array structure in a pack case and accordingly increasing energy density of the battery pack.

The technical problems of the present disclosure to be solved are not limited to the aforementioned problems, and these and other problems will be clearly understood by those skilled in the art from the following description.

### Technical Solution

A battery pack according to the present disclosure may include a cell array structure including a plurality of battery cells; a pack case accommodating the cell array structure; and a fixing portion disposed at a location at which the cell array structure and the pack case face each other and configured to fix the cell array structure to the pack case through form-fitting coupling.

The fixing portion may include a protruding structure in any one of the cell array structure or the pack case and a recessed structure in the other one of the cell array structure or the pack case, and the protruding structure and the recessed structure may form-fit to each other.

The pack case may include a bottom plate disposed below the cell array structure; and an outer side wall disposed at an outer edge of the bottom plate, and the fixing portion may be disposed on an outermost side of the cell array structure and an inner wall of the outer side wall.

The fixing portion may include a fastening protrusion portion in any one of the cell array structure or the outer side wall; and a fastening groove portion in the other one of the cell array structure or the outer side wall.

The cell array structure may include a plurality of unit cell groups including the plurality of battery cells; and a side frame disposed between the plurality of unit cell groups, the side frame may include a side structure interposed between the unit cell groups; and a side wall interposed between the pack case and the unit cell group, the fastening protrusion portion may be disposed in the outer side wall, and the fastening groove portion may be disposed in the side wall.

The fastening groove portion may include an inward recessed groove formed on one surface of the side wall along a thickness direction of the side wall; and a mounting step protruding in the inward recessed groove.

When the cell array structure is coupled to the pack case, the fastening protrusion portion may be mounted and supported on the mounting step.

A horizontal cross section of the fastening protrusion portion may protrude in a triangular shape.

The inward recessed groove may be recessed in a triangular shape to conform to a shape of the fastening protrusion portion.

The inward recessed groove may be formed at an area that is not interfered with a location at which any one battery cell and an adjacent other battery cell are arranged side by side when the cell array structure is viewed from top.

As the fastening protrusion portion is inserted into the fastening groove portion, the cell array structure may slidably move down and be mounted and supported on the pack case.

The fastening protrusion portion and the mounting step may have a fastening hole in a longitudinal direction, and a fastening member may be coupled to the fastening hole.

Additionally, according to the present disclosure, there is provided a vehicle including the above-described battery pack.

### Advantageous Effects

According to an aspect of the present disclosure, as the protruding structure on the inner wall of the pack case and the recessed structure in the empty space between the battery cells form-fit to each other, it may be possible to optimize the mounting structure for mounting the cell array structure in the pack case and thereby increase energy density of the battery pack.

Additionally, according to an aspect of the present disclosure, it may be possible to ensure a strong coupling strength between the pack case and the cell array structure, thereby firmly fixing the cell array structure to the pack case in keeping up with the trend of the cell array structure towards larger area and higher weight.

Additionally, according to an aspect of the present disclosure, as the mounting and coupling operation may be performed by slidable coupling between the recessed structure of the cell array structure and the protruding structure of the pack case, it may be possible to improve assembly efficiency of the pack.

The effects of the present disclosure are not limited to the aforementioned effects, and these and other effects will be clearly understood by those skilled in the art from the present disclosure and the accompanying drawings.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus, the present disclosure should not be construed as being limited to the drawings.
FIG. 1 is a schematic perspective view of the main components of a battery pack according to an embodiment of the present disclosure.
FIG. 2 is an exploded perspective view of FIG. 1.
FIG. 3 is a perspective view of a battery pack according to an embodiment of the present disclosure, from which a top cover plate is removed.
FIG. 4 is an enlarged perspective view of a pack case in FIG. 2.
FIG. 5 is a top view of FIG. 4.
FIG. 6 is a partial enlarged perspective view of a side frame in FIG. 2.
FIG. 7 is a diagram of a cell array structure applied to a battery pack according to an embodiment of the present disclosure.
FIG. 8 is an assembly perspective view of FIG. 7.
FIG. 9 is a partial top view of a cell array structure received in a battery pack according to an embodiment of the present disclosure.
FIG. 10 is a cutaway perspective view of FIG. 9, taken along the line A-A'.
FIG. 11 is a longitudinal cross-sectional view of a battery pack according to an embodiment of the present disclosure.
FIG. 12 is a diagram illustrating a vehicle according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

In the drawings, the size of each element or a particular part of the element is exaggerated, omitted or schematically shown for convenience and clarity of description. Accordingly, the size of each element does not exactly reflect the actual size. When it is determined that a detailed description of related known functions or elements may unnecessarily obscure the subject matter of the present disclosure, the description is omitted.

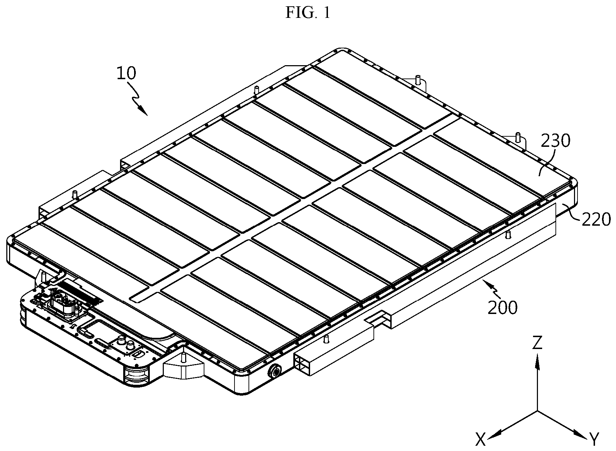

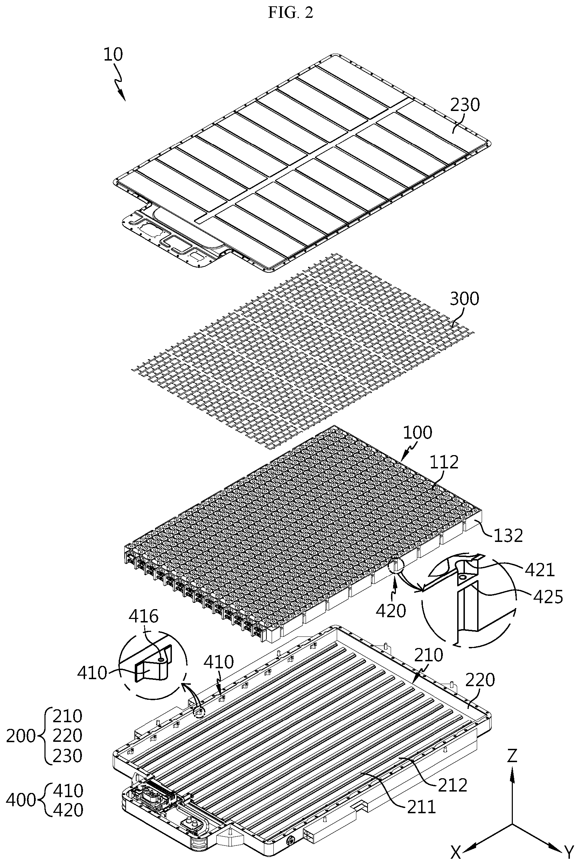

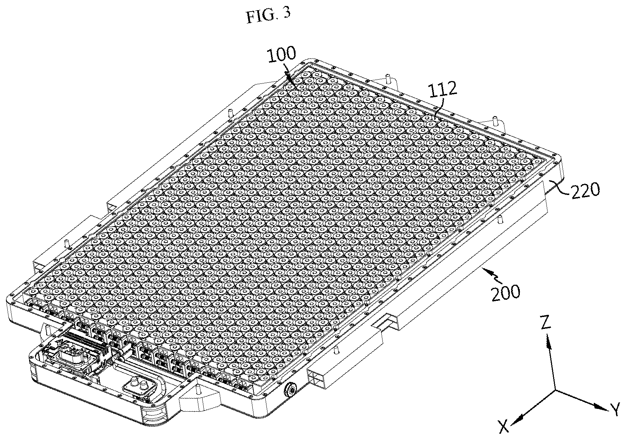

FIG. 1 is a schematic perspective view of the main components of a battery pack according to an embodiment of the present disclosure, FIG. 2 is an exploded perspective view of FIG. 1, and FIG. 3 is a perspective view of the battery pack according to an embodiment of the present disclosure, from which a top cover plate is removed.

Referring to FIGs. 1 to 3, the battery pack 10 according to an embodiment of the present disclosure may include a cell array structure 100 including a plurality of battery cells 112, a pack case 200 accommodating the cell array structure 100, a busbar assembly 300 disposed on the cell array structure 100, the top cover plate 230, and a fixing portion 400 disposed at a location at which the cell array structure 100 and the pack case 200 face each other.

Referring primarily to FIG. 2, the cell array structure 100 may include the plurality of battery cells 112.

The plurality of battery cells 112 may include secondary batteries, for example, cylindrical secondary batteries, pouch-type secondary batteries or prismatic secondary batteries. Hereinafter, this embodiment will be described based on cylindrical secondary batteries as the plurality of battery cells 112. The battery cells 112 may be a plurality of cylindrical secondary batteries arranged in the horizontal direction and standing in the vertical direction.

The plurality of battery cells 112 standing upright may be stacked in the horizontal direction or on the horizontal plane (X-Y plane) as shown in FIG. 2. Additionally, a cooling structure or a structure (a side frame 130 as described below) for maintaining the interval between the battery cells 112 may be disposed or coupled between each of the plurality of battery cells 112 to form the cell array structure 100 which is an assembly of battery cells 112.

Here, the cell array structure 100 may be a single assembly (structure) of flat plate type having a predetermined thickness (for example, the height of the battery cell 112) as described in detail below. Additionally, the cell array structure 100 may increase in area and the cell array structure 100 may increase in weight. The single large-area structure may have a predetermined structure strength. Accordingly, the cell array structure 100 may be a component of cell to pack.

The pack case 200 may accommodate the cell array structure 100. As shown in FIGs. 2 and 3, the pack case 200 may include a bottom plate 210, an outer side wall 220 disposed at the edge of the bottom plate 210, the busbar assembly 300 disposed on the cell array structure 100 and the top cover plate 230. Here, the cell array structure 100 may be received in the internal space formed by the bottom plate 210, the outer side wall 220 and the top cover plate 230.

The bottom plate 210 may be disposed below the cell array structure 100. The bottom plate 210 may contact and support the bottom of the cell array structure 100. The bottom plate 210 may include a convex portion 211 and a concave portion 212.

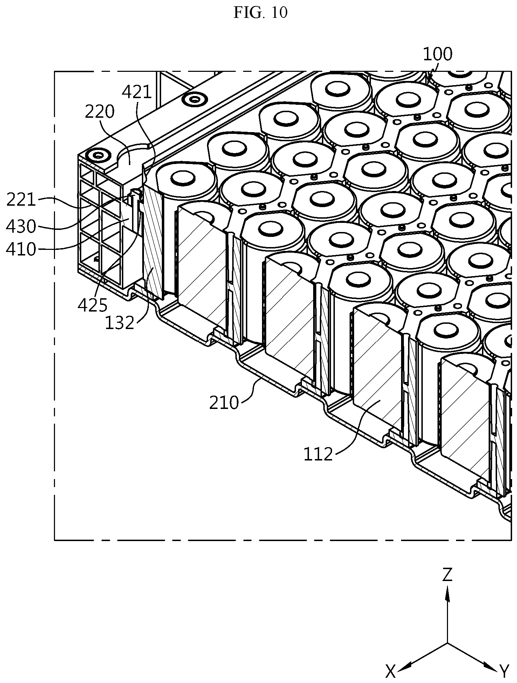

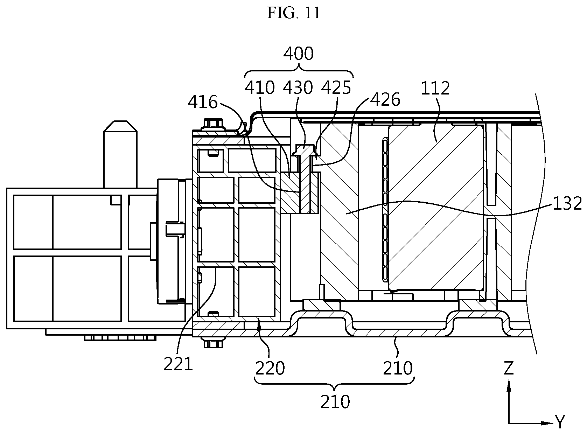

The outer side wall 220 refers to a sort of frame having a predetermined height disposed at the outer edge, and the bottom plate 210 may be coupled to the bottom of the outer side wall 220. The outer side wall 220 may be hollow and may have a plurality of reinforcement partitions 221 (see FIGs. 10, 11).

The busbar assembly 300 may be disposed on the cell array structure 100 and configured to electrically the plurality of battery cells 112. Additionally, the top cover plate 230 may be disposed on top of the pack case 200 and configured to cover the upper surface of the cell array structure 100.

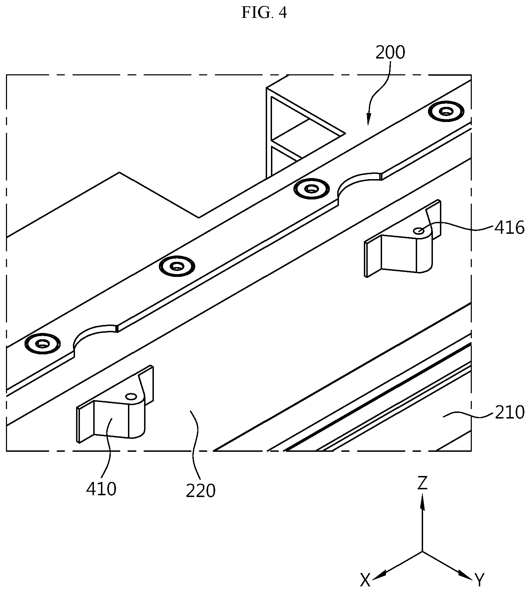

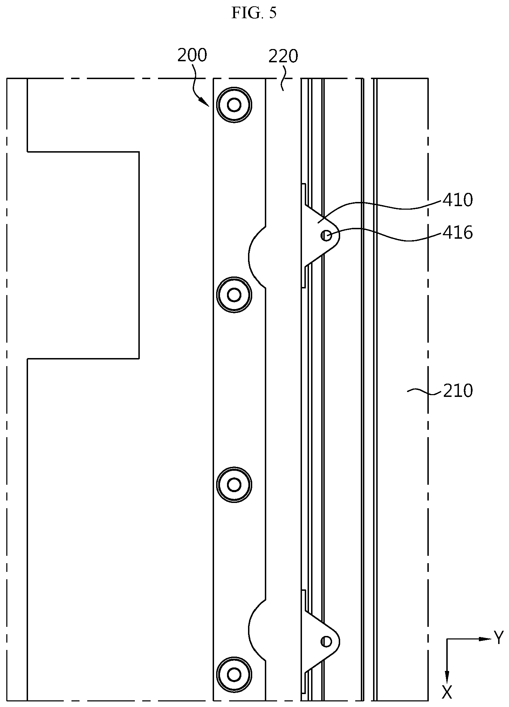

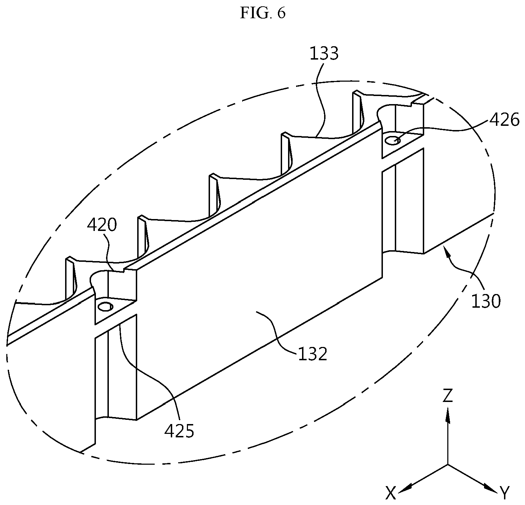

FIG. 4 is an enlarged perspective view of the bottom plate and the outer side wall in FIG. 2, FIG. 5 is a top view of FIG. 4, and FIG. 6 is a partial enlarged perspective view of the side frame in FIG. 2.

Referring to FIGs. 4 to 6 together with FIG. 2, the fixing portion 400 may be disposed at the location at which the cell array structure 100 and the pack case 200 face each other. The fixing portion 400 may include a protruding structure in any one of the cell array structure 100 or the pack case 200, and a recessed structure in the other one of the cell array structure 100 or the pack case 200. Additionally, the protruding structure and the recessed structure may form-fit to each other.

The fixing portion 400 may include a fastening protrusion portion 410 in any one of the cell array structure 100 or the outer side wall 220, and a fastening groove portion 420 in the other one of the cell array structure 100 or the outer side wall 220.

For example, the fastening protrusion portion 410 may be disposed at the inner wall of the outer side wall 220. The fastening protrusion portion 410 may be disposed in the middle of the inner wall of the outer side wall 220. The fastening protrusion portion 410 may form-fit to the fastening groove portion 420 and configured to mount a part of the fastening groove portion 420.

Additionally, the fastening groove portion 420 may be disposed at the cell array structure 100. The fastening groove portion 420 may be formed at a side wall 132 on the outermost side of the cell array structure 100 and may be disposed opposite the fastening protrusion portion 410. In particular, the fastening groove portion 420 may be formed in a so-called empty space that is not interfered with a location at which any one battery cell 112 and its adjacent other battery cell 112 are arranged side by side in the cell array structure 100.

Accordingly, when the cell array structure 100 is assembled with the pack case 200, the protruding structure (the fastening protrusion portion 410 in this embodiment) on the inner wall of the outer side wall 220 and the recessed structure (the fastening groove portion 420 in this embodiment) in the empty space between the battery cells 112 may form-fit to each other.

According to this embodiment, as the protruding structure on the inner wall of the pack case 200 and the recessed structure in the empty space between the battery cells 112 form-fit to each other, it may be possible to optimize the mounting structure for mounting the cell array structure 100 in the pack case 200, thereby increasing energy density of the battery pack 10. This may eliminate the need for a mounting structure (a flange, etc.) on the pack case 200 to fix the cell array structure, and more battery cells 112 may be received as much as the space occupied by the deleted mounting structure. Alternatively, it may be possible to increase the capacity of the battery cell 112 for the same volume of the battery pack 10.

Additionally, when the fastening groove portion 420 is inserted into the fastening protrusion portion 410 and a part of the fastening groove portion 420 is mounted and supported on the fastening protrusion portion 410, the pack case 200 and the cell array structure 100 may be strongly coupled to each other. In keeping up with the trend of the cell array structure 100 towards larger area and higher weight, the cell array structure 100 may be fixed to the pack case 200 more firmly.

Hereinafter, the cell array structure 100 and the fixing portion 400 according to an embodiment of the present disclosure will be described in more detail.

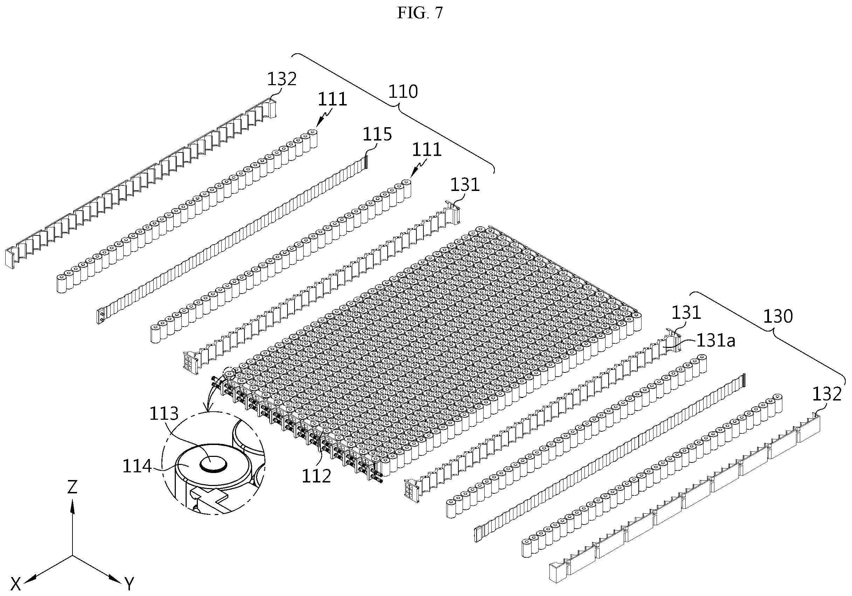

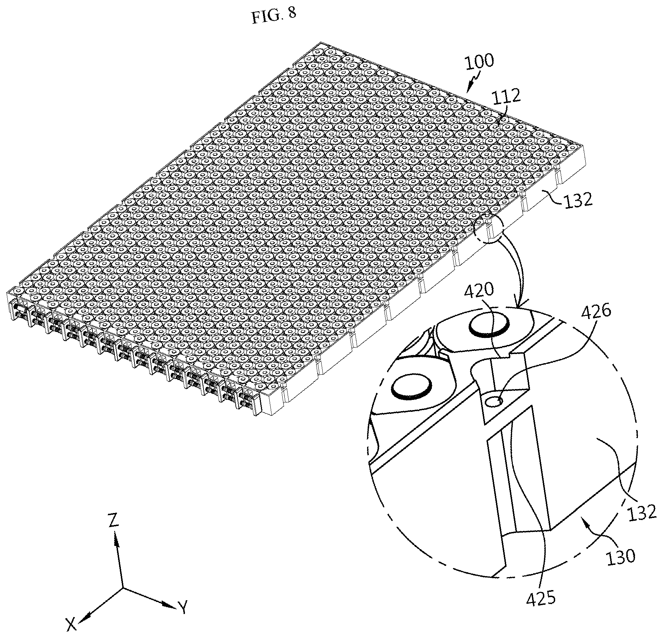

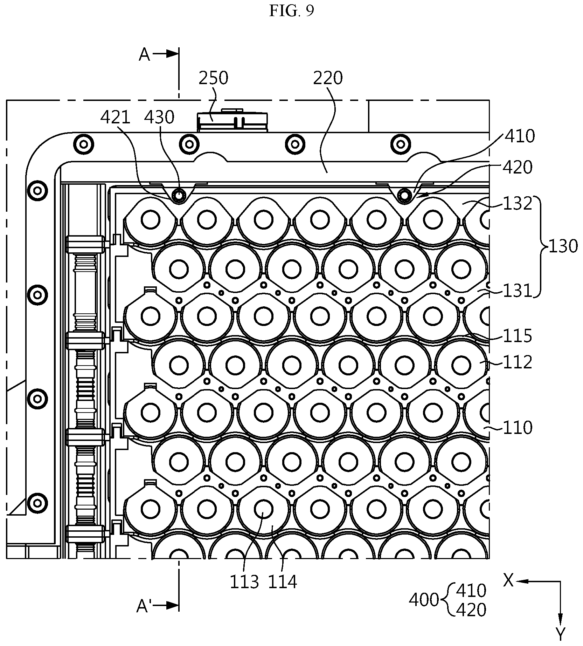

FIG. 7 is a diagram of the cell array structure applied to the battery pack according to an embodiment of the present disclosure, FIG. 8 is an assembly perspective view of FIG. 7, and FIG. 9 is a partial top view of the cell array structure received in the battery pack according to an embodiment of the present disclosure.

Referring to FIGs. 7 to 9 together with FIG. 2, the cell array structure 100 may include a plurality of unit cell groups 110 including the plurality of battery cells 112 and a cooling tube 115 attached to the plurality of battery cells 112, and the side frame 130 disposed between the plurality of unit cell groups 110.

The battery cell 112 may have a tab portion 113 and an upper surface 114 on top. The tab portion 113 may have a first polarity, and the upper surface 114 may have a second polarity. The tab portion 113 and the upper surface 114 may be electrically isolated from each other. The first polarity may be a positive polarity of the battery cell 112, and the second polarity may be a negative electrode of the battery cell 112. That is, the tab portion 113 may be a positive electrode portion of the battery cell 112, and the upper surface 114 may be a negative electrode portion of the battery cell 112. The tab portion 113 may be extended from the upper surface 114. Alternatively, the tab portion 113 may not be extended from the upper surface 114. For example, the tab portion 113 may be disposed on the same plane as the upper surface, like a so-called tab-less structure. The components of the battery cell 112 are well known to those skilled in the art at the time of filing the application, and its detailed description is omitted.

A plurality of battery cells 112 may form a cell array 111. That is, the cell array 111 may include the plurality of battery cells 112 arranged in a line side by side along the length direction (X axis direction) of the battery pack 10. The number of battery cells 112 that form the cell array 111 is not limited to a particular range.

Additionally, the unit cell group 110 may include a pair of cell arrays 111 and the cooling tube 115 between the pair of cell arrays 111. That is, the unit cell group 110 may include the pair (two) of cell arrays 111 and the cooling tube 115 interposed between the pair of cell arrays 111. Here, the cooling tube 115 cools the battery cell 112 while being in contact with one surface of the cell array 111. The cooling tube 115 may be a structure having an empty space in which a cooling medium flows, and may be configured to directly transfer heat from the battery cells 112 to the cooling medium while being in contact the outer surface of the plurality of battery cells 112.

Because the plurality of battery cells 112 is disposed on the outer side, the unit cell group 110 has a curved shape. Accordingly, the cell array structure 100 may include the side frame 130 to accommodate the curved shape and to fix the plurality of battery cells 112 and maintain the interval between the battery cells 112.

The side frame 130 may be disposed between the unit cell group 110 and the adjacent unit cell group 110, or at the front end of the unit cell group 110. Specifically, the side frame 130 may include a side structure 131 interposed between the unit cell groups 110, and the side wall 132 interposed between the pack case 200 and the unit cell group 110.

The side structure 131 may be disposed between the pair of unit cell groups 110. The side structure 131 may be disposed between the unit cell group 110 and the adjacent unit cell group 110 to fix at least one pair of unit cell groups 110 and maintain the interval between the battery cells 112. As primarily shown in FIGs. 2 and 3, the side structure 131 may have a concave groove 131a to conform to the shape of the outer surface of the unit cell group 110 on each of one surface and the other surface in the length direction. The internal curvature of the concave groove 131a or the number of concave grooves 131a may be determined according to the specification of the outer surface of the unit cell group 110 or the battery cell 112 form-fitted to the side structure 131.

A pair of side walls 132 may be disposed at two sides in the assembly direction (Y axis direction) in which the unit cell group 110 and the side structure 131 are assembled. The side wall 132 may be disposed at the outermost side of the cell array structure 100 in the width direction (X axis direction). One surface of the side wall 132 may have the concave recess 133 in which one surface of the unit cell group 110 is received, and the other surface (the opposite surface) may be so flat to contact the outer side wall 220 of the pack case 200. Accordingly, the cell array structure 100 and the outer side wall 220 may contact each other without an unnecessary gap.

As described above, the plurality of unit cell groups 110, the plurality of side structures 131 and the plurality of side walls 132 may be assembled to form one cell array structure 100. The cell array structure 100 may be a structure having structure strength without any module case.

Specifically, the side frame 130 may be disposed for each of the plurality of battery cells 112 in the cell array structure 100, or on one surface of the cell array 111 and configured to fix and support the plurality of battery cells 112. Additionally, the side frame 130 may be attached to the plurality of battery cells 112 to form a structure as the cell array structure 100, thereby achieving larger area and higher weight.

Referring to FIG. 8 together with FIGs. 4 to 6, the fixing portion 400 may include the fastening protrusion portion 410 in any one outer side walls 220, and the fastening groove portion 420 in the cell array structure 100.

The fastening protrusion portion 410 may be disposed on the inner wall of the outer side wall 220, and may be disposed at the central part of the outer side wall 220 in the thickness direction. Additionally, the horizontal cross section of the fastening protrusion portion 410 may protrude in a triangular shape. The fastening protrusion portion 410 may have a fastening hole 416 in the longitudinal direction, and a fastening member 430 may be coupled to the fastening hole 416.

The fastening groove portion 420 may include an inward recessed groove 421 on one surface of the side wall 132 along the thickness direction of the side wall 132, and a mounting step 425 protruding in the inward recessed groove 421.

The inward recessed groove 421 may be recessed in a triangular shape to conform to the shape of the fastening protrusion portion 410. That is, the inward recessed groove 421 may be recessed in the shape of a triangle with the top vertex facing the thickness direction of the side wall 132. Additionally, the inward recessed groove 421 may be continuously formed from top to bottom of the side wall 132 in the thickness direction of the side wall 132.

The inward recessed groove 421 may be formed at the area that is not interfered with the location at which any one battery cell 112 and its adjacent other battery cell 112 are arranged side by side when the cell array structure 100 is viewed from the top. That is, the inward recessed groove 421 may be formed in the empty space that is an unused space (a buffer space) between the battery cell 112 and the adjacent battery cell 112. Accordingly, compared to the conventional structure having an additional mounting space, this may have a beneficial effect on energy density.

The mounting step 425 may be disposed in the middle of the inward recessed groove 421. The mounting step 425 may protrude outward from the triangular recessed structure of the inward recessed groove 421. The mounting step 425 may be mounted on the upper surface of the fastening protrusion portion 410 and configured to mount and support the cell array structure 100 on the pack case 200. The mounting step 425 may have a fastening hole 426 in the longitudinal direction.

According to this embodiment, as the protruding structure on the inner wall of the outer side wall 220 and the recessed structure in the empty space between the battery cells 112 form-fit to each other, it may be possible to optimize the mounting structure for mounting the cell array structure 100 in the pack case 200, thereby increasing energy density of the battery pack 10.

Additionally, according to this embodiment, it may be possible to ensure a strong coupling strength between the pack case 200 and the cell array structure 100, thereby firmly fixing the cell array structure 100 to the pack case 200 in keeping up with the trend of the cell array structure 100 towards larger area and higher weight. As the fixing portion 400 may firmly support the cell array structure 100 of larger area, it may be possible to ensure high resistance to vibration or external impact.

Additionally, as the mounting and coupling may be performed by slidable coupling between the recessed structure of the cell array structure 100 and the protruding structure of the pack case 200, it may be possible to improve assembly efficiency of the pack.

Furthermore, as the cell array structure 100 is firmly fixed to the pack case 200, it may be possible to significantly reduce the disconnect or short issue of the electrical connection line that may occur in the event of deformation such as twist of the cell array structure 100 itself or twist or dislocation due to external impact and reduce the crack or damage risk at the mounting location of the cell array structure 100 and the pack case 200.

Hereinafter, the coupling process will be described.

FIG. 10 is a cutaway perspective view of FIG. 9, taken along the line A-A', and FIG. 11 is a longitudinal cross-sectional view of the battery pack according to an embodiment of the present disclosure.

The pack case 200 is placed, and the cell array structure 100 moves down from above.

As the fastening protrusion portion 410 is inserted into the fastening groove portion 420, the cell array structure 100 slidably moves down.

The mounting step 425 may protrude outward from a location of the inward recessed groove 421. Accordingly, as the cell array structure 100 slidably moves down, when the cell array structure 100 is coupled to the pack case 200, the mounting step 425 is mounted on the fastening protrusion portion 410.

As shown in FIGs. 10 and 11, the fastening protrusion portion 410 and the mounting step 425 has the fastening holes 416, 426 in the longitudinal direction, respectively, and the fastening member 430 is coupled to the fastening holes 416, 426.

Accordingly, as the protruding structure on the inner wall of the outer side wall 220 and the recessed structure in the empty space between the battery cells 112 form-fit to each other, it may be possible to optimize the mounting structure for mounting the cell array structure 100 in the pack case 200, thereby increasing energy density of the battery pack 10.

Additionally, according to this embodiment, it may be possible to ensure a strong coupling strength between the pack case 200 and the cell array structure 100, thereby firmly fixing the cell array structure 100 to the pack case 200 in keeping up with the trend of the cell array structure 100 towards larger area and higher weight. As the fixing portion 400 may firmly support the cell array structure 100 of larger area, it may be possible to ensure resistance to vibration or external impact.

Additionally, as the mounting and coupling operation may be performed by slidable coupling between the recessed structure of the cell array structure 100 and the protruding structure of the pack case 200, it may be possible to improve assembly efficiency of the pack.

Although not shown, the battery pack 10 according to the present disclosure may further include various types of devices to control the charge and discharge of the battery cells 112, for example, a Battery Management System (BMS), a current sensor, a fuse, etc.

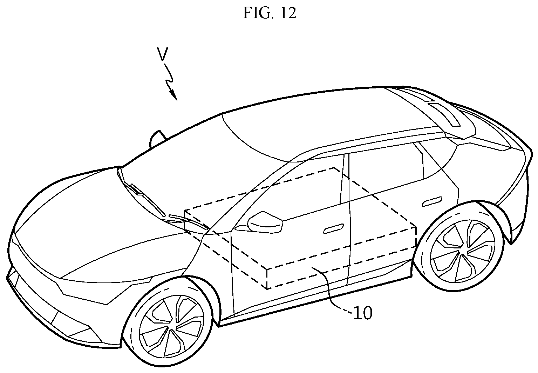

FIG. 12 is a diagram illustrating a vehicle according to an embodiment of the present disclosure.

Referring to FIG. 12, the battery pack 10 according to the present disclosure may be applied to the vehicle V such as an electric vehicle or a hybrid electric vehicle. That is, the vehicle V according to the present disclosure may include the battery pack 10 according to the present disclosure. The battery pack 10 may be installed at a car frame below the vehicle seat or a trunk space, and when installing in the vehicle, the battery pack 10 may be placed in the reverse order, if necessary.

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

**[List of reference numerals]**

| | | | |
|---|---|---|---|
| 100: | Cell array structure | | |
| 110: | Unit cell group | 111: | Cell array |
| 112: | Battery cell | 115: | Cooling tube |
| 130: | Side frame | | |
| 131: | Side structure | 132: | Side wall |
| 200: | Pack case | 210: | Bottom plate |
| 220: | Outer side wall | 221: | Reinforcement partition |
| 230: | Top cover plate | | |
| 300: | Busbar assembly | | |
| 400: | Fixing portion | 410: | Fastening protrusion portion |
| 416: | Fastening hole | 420: | Fastening groove portion |
| 421: | Inward recessed groove | 425: | Mounting step |
| 426: | Fastening hole | 430: | Fastening member |

## Claims

1. A battery pack comprising:
a cell array structure including a plurality of battery cells;
a pack case accommodating the cell array structure; and
a fixing portion disposed at a location at which the cell array structure and the pack case face each other and configured to fix the cell array structure to the pack case through form-fitting coupling.

2. The battery pack according to claim 1, wherein the fixing portion includes a protruding structure in any one of the cell array structure or the pack case and a recessed structure in the other one of the cell array structure or the pack case, and the protruding structure and the recessed structure form-fit to each other.

3. The battery pack according to claim 1, wherein the pack case includes:
a bottom plate disposed below the cell array structure; and
an outer side wall disposed at an outer edge of the bottom plate, and
wherein the fixing portion is disposed on an outermost side of the cell array structure and an inner wall of the outer side wall.

4. The battery pack according to claim 3, wherein the fixing portion includes:
a fastening protrusion portion in any one of the cell array structure or the outer side wall; and
a fastening groove portion in the other one of the cell array structure or the outer side wall.

5. The battery pack according to claim 4, wherein the cell array structure includes:
a plurality of unit cell groups including the plurality of battery cells; and
a side frame disposed between the plurality of unit cell groups,
wherein the side frame includes:
a side structure interposed between the unit cell groups; and
a side wall interposed between the pack case and the unit cell group,
wherein the fastening protrusion portion is disposed in the outer side wall, and
wherein the fastening groove portion is disposed in the side wall.

6. The battery pack according to claim 5, wherein the fastening groove portion includes:
an inward recessed groove formed on one surface of the side wall along a thickness direction of the side wall; and
a mounting step protruding in the inward recessed groove.

7. The battery pack according to claim 6, wherein when the cell array structure is coupled to the pack case, the fastening protrusion portion is mounted and supported on the mounting step.

8. The battery pack according to claim 4, wherein a horizontal cross section of the fastening protrusion portion protrudes in a triangular shape.

9. The battery pack according to claim 6, wherein the inward recessed groove is recessed in a triangular shape to conform to a shape of the fastening protrusion portion.

10. The battery pack according to claim 6, wherein the inward recessed groove is formed at an area that is not interfered with a location at which any one battery cell and an adjacent other battery cell are arranged side by side when the cell array structure is viewed from top.

11. The battery pack according to claim 6, wherein as the fastening protrusion portion is inserted into the fastening groove portion, the cell array structure slidably moves down and is mounted and supported on the pack case.

12. The battery pack according to claim 6, wherein the fastening protrusion portion and the mounting step have a fastening hole in a longitudinal direction, and
wherein a fastening member is coupled to the fastening hole.

13. A vehicle comprising the battery pack according to any one of claims 1 to 12.
